(19) Europäisches Patentamt
European Patent Office
Office européen des brevets

(11) **EP 0 884 372 B1**

(12) **FASCICULE DE BREVET EUROPEEN**

(45) Date de publication et mention
de la délivrance du brevet:
**13.10.2004 Bulletin 2004/42**

(51) Int Cl.⁷: **C10G 45/04**, B01J 21/04

(21) Numéro de dépôt: **98401209.6**

(22) Date de dépôt: **19.05.1998**

(54) **Hydrotraitement de charges hydrocarbonées dans un réacteur en lit bouillonnant**

Hydrotreating von Kohlenwasserstoffeinsätzen im wallenden Bett

Hydrotreatment of hydrocarbon feeds in an ebullated bed reactor

(84) Etats contractants désignés:
**BE DE DK FR NL**

(30) Priorité: **10.06.1997 FR 9707150**

(43) Date de publication de la demande:
**16.12.1998 Bulletin 1998/51**

(73) Titulaire: **Institut Français du Pétrole**
**92500 Rueil Malmaison (FR)**

(72) Inventeurs:
• **Harle, Virginie**
**60270 Gouvieux (FR)**
• **Kasztelan, Slavik**
**92500 Rueil Malmaison (FR)**
• **Morel, Frédéric**
**69340 Francheville (FR)**
• **Kressmann, Stéphane**
**69360 Serezin du Rhone (FR)**
• **Courty, Philippe**
**94800 Villejuif (FR)**

(56) Documents cités:
EP-A- 0 015 196     EP-A- 0 098 764
EP-A- 0 113 284     EP-A- 0 153 674
EP-A- 0 353 129     EP-A- 0 449 672

Remarques:
Le dossier contient des informations techniques présentées postérieurement au dépôt de la demande et ne figurant pas dans le présent fascicule.

**Description**

La présente invention concerne l'utilisation dans un réacteur en lit bouillonnant d'un catalyseur d'hydroraffinage et/ou d'hydroconversion de charges hydrocarbonées (également appelés hydrotraitement), ledit catalyseur comprenant un support essentiellement à base d'alumine sous la forme d'extrudés, éventuellement au moins un métal catalytique ou un composé de métal catalytique du groupe VIB (groupe 6 de la nouvelle notation de la table périodique des éléments), de préférence le molybdène et le tungstène, de façon encore plus préférée le molybdène, et/ou éventuellement au moins un métal catalytique ou un composé de métal catalytique du groupe VIII (groupe 8, 9 et 10 de la nouvelle notation de la table périodique des éléments), de préférence le fer, le nickel ou le cobalt. Ce catalyseur est préparé selon une méthode comprenant une étape d'hydratation ou de mûrissement d'alumine issue de la décomposition rapide d'hydrargillite; il fait l'objet d'une demande de brevet spécifique, selon la demande internationale WO 98 56 499 A.

La présente invention concerne donc en particulier l'utilisation dudit catalyseur dans un procédé d'hydroraffinage et/ou d'hydroconversion de charges hydrocarbonées telles que les coupes pétrolières, les coupes issus du charbon ou les hydrocarbures produits à partir de gaz naturel. Le procédé d'hydroraffinage et/ou d'hydroconversion selon l'invention comprend au moins un réacteur triphasique contenant ledit catalyseur d'hydroraffinage et/ou d'hydroconversion en lit bouillonnant.

Une telle mise en oeuvre est par exemple décrite dans les brevets américains 4 251 295 ou US 4 495 060 relatifs au procédé H-OIL.

L'hydrotraitement des charges hydrocarbonées, telles que les coupes pétrolières soufrées, prend une importance de plus en plus grande dans la pratique du raffinage avec la nécessité croissante de réduire la quantité de soufre dans les coupes pétrolières et de convertir des fractions lourdes en fractions plus légères valorisables en tant que carburant. Il est en effet nécessaire, à la fois pour satisfaire les spécifications imposés par chaque pays pour les carburants commerciaux et pour des raisons économiques, de valoriser au mieux des bruts importés de plus en plus riches en fractions lourdes et en hétéroatomes et de plus en plus pauvres en hydrogène. Cette valorisation implique une réduction relativement importante du poids moléculaire moyen des constituants lourds, qui peut être obtenue par exemple au moyen de réactions de craquage ou d'hydrocraquage de charges préalablement raffinées, c'est-à-dire désulfurées et déazotées. Van Kessel et al expliquent en détail ce contexte dans un article publiés dans la revue Oil & Gas Journal, le 16 Février 1987 en pages 55 à 66.

Il est par ailleurs connu de l'homme du métier que lors des réactions d'hydrotraitement de fractions pétrolières contenant des complexes organométalliques, la plupart de ces complexes se détruisent en présence d'hydrogène, d'hydrogène sulfuré, et d'un catalyseur d'hydrotraitement. Le métal constitutif de ces complexes précipite alors sous forme d'un sulfure solide qui vient se fixer sur la surface interne des pores. C'est en particulier le cas des complexes du vanadium, du nickel, du fer, du sodium, du titane, du silicium, et du cuivre qui sont naturellement présents dans les pétroles bruts en plus ou moins grande abondance selon l'origine du pétrole, et qui, lors des opérations de distillation ont tendance à ce concentrer dans les fractions à point d'ébullition élevé et en particulier dans les résidus. C'est aussi le cas des liquéfiats de charbon qui renferrrent également des métaux, en particulier du fer et du titane. Le terme général hydrodémétallation (HDM) est utilisé pour désigner ces réactions de destruction des complexes organométalliques dans les hydrocarbures.

L'accumulation des dépôts solides dans les pores du catalyseur peut se poursuivre jusqu'au bouchage complet d'une partie des pores commandant l'accès des réactifs à une fraction du réseau poreux interconnecté de telle sorte que cette fraction devient inactive alors même que les pores de cette fraction sont seulement faiblement encombrés ou même intacts. Ce phénomène peut donc provoquer une désactivation prématurée et très importante du catalyseur. Il est particulièrement sensible dans le cas des réactions d'hydrodémétallation en présence d'un catalyseur hétérogène supporté. Par hétérogène, on entend non soluble dans la charge d'hydrocarbures. On constate en effet dans ce cas que les pores de la périphérie du grain s'obstruent plus vite que les pores centraux. De même, les bouches des pores s'obstruent plus vite que leurs autres parties. L'obstruction des pores va de pair avec une réduction progressive de leur diamètre, ce qui entraîne une limitation accrue de la diffusion des molécules et une accentuation du gradient de concentration, donc une accentuation de l'hétérogénéité du dépôt depuis la périphérie vers l'intérieur des particules poreuses au point que l'obstruction complète des pores débouchant à l'extérieur se produit très rapidement : l'accès à la porosité interne presque intacte des particules est alors fermé aux réactifs et le catalyseur est prématurément désactivé.

Le phénomène qui vient d'être décrit est bien connu sous le nom de "colmatage aux bouches des pores". Les preuves de son existence et l'analyse de ses causes ont été publiées à plusieurs reprises dans la littérature scientifique internationale, par exemple : "Catalyst deactivation through pore mouth plugging" présenté au 5ème symposium international sur le génie de la réation chimique à Houston, Texas, U.S.A. en Mars 1978, ou encore "Effects of feed metals on catalysts aging in hydroprocessing residuum" dans Industrial Engineering Chemistry Process Design and Development, volume 20, pages 262 à 273 publié en 1981 par l'American Chemical Society, ou encore plus récemment dans "Effect of Catalyst pore structure on hydrotreating of heavy oil" présenté au congrès national de l'American Chemical Society à Las Vegas, U.S.A., le 30 Mars 1982.

Un catalyseur d'hydrotraitement de coupes hydrocarbonées lourdes contenant des métaux doit donc être composé d'un support catalytique présentant un profil de porosité particulièrement adapté aux contraintes diffusionnelles spécifiques aux hydrotraitements et notamment à l'hydrodémétallation.

Les catalyseurs usuellements employés dans les procédés d'hydrotraitement sont composés d'un support sur lequel sont déposés des oxydes métalliques, tels que par exemple les oxydes de cobalt, de nickel ou de molybdène. Le catalyseur est ensuite sulfuré pour transformer tout ou partie des oxydes métalliques en phase sulfures métalliques. Le support est en général à base d'alumine, son rôle consiste à disperser la phase active et présenter une texture adaptée à une bonne captation des impuretées métalliques, tout en évitant les problèmes de colmatage mentionnés ci-dessus.

Ainsi, des catalyseurs présentant une répartition poreuse particulière sont décrits dans le brevet américain 4,395,329. Les supports à base d'alumine de l'art antérieur sont de deux types. Premièrement, il existe des extrudés d'alumine préparés à partir d'un gel d'alumine. Les catalyseurs d'hydrotraitement préparés à partir de ces extrudés présentent plusieurs inconvénients. Tout d'abord, le procédé de préparation de l'alumine gel est particulièrement polluant, contrairement à celui de l'alumine issue de la déshydratation rapide de l'hydrargillite, dite alumine flash. Ensuite, la porosité des supports à base d'alumine gel est surtout adaptée à l'hydrodésulfuration et l'hydrotraitement des coupes hydrocarbonées légères, et non aux autres types d'hydrotraitements. Par ailleurs, même si ces extrudés sont équilibrés dans leur rapport hydrodémétallation/hydrodésulfuration, leur capacité de rétention en hydrométallation est faible, en général d'au plus 30% poids, si bien qu'ils sont rapidement saturés et doivent être remplacés. En outre, compte tenu du coût de production élevé du gel d'alumine, la fabrication de ces catalyseurs est très coûteuse.

En second lieu, des billes d'alumine préparées par déshydratation rapide d'hydrargillite puis agglomération de la poudre d'alumine flash obtenue sont employées comme support de catalyseurs d'hydrotraitement de charges hydrocarbonées contenant des métaux. Le coût de préparation de ces billes est moins élevé, toutefois afin de le maintenir à un niveau satisfaisant, il est nécessaire de préparer des billes d'un diamètre supérieur à 2 mm. En conséquence, les métaux ne peuvent pas s'introduire jusqu'au coeur des billes, et la phase catalytique qui s'y trouve n'est pas utilisée.

Des catalyseurs d'hydrotraitement préparés à partir d'extrudés d'alumine flash de plus petite taille et présentant une porosité adaptée à l'hydrotraitement, ne présenteraient pas tous ces inconvénients, mais il n'existe pas aujourd'hui de procédé industriel pour préparer de tels catalyseurs. Les catalyseurs décrits dans le brevet français FR-2 528 721, comprennent bien une porosité adaptée à l'hydrotraitement de charges hydrocarbonées contenant des métaux: ces catalyseurs ont une structure "en oursin" permettant d'accepter des dépôts notables de métaux. Il est également mentionné dans ce brevet la possibilité d'utiliser de l'alumine préparée par déshydratation rapide d'hydrargillite. Les procédés de fabrication industrielle des catalyseurs décrits dans ce brevet sont cependant plus particulièrement adaptés à la production de billes, et très difficiles à mettre en oeuvre industriellement pour la préparation d'extrudés.

La présente invention concerne l'utilisation d'un catalyseur d'hydrotraitement de fractions carbonées dans des réactions d'hydrotraitement, notamment les réactions d'hydrogénation, d'hydrodéazotation, d'hydrodéoxygénation, d'hydrodéaromatisation, d'hydroisomérisation, d'hydrodéalkylation, d'hydrodéparaffinage, d'hydrocraquage, et d'hydrodésulfuration présentant une activité en hydrodémetallation au moins équivalente à celle des catalyseurs connus à ce jour de l'homme du métier, et permettant d'obtenir des résultats en hydrotraitement particulièrement élevés par rapport aux produits de l'art antérieur.

Le catalyseur utilisé selon l'invention comprend un support essentiellement à base d'alumine sous la forme d'extrudés, éventuellement au moins un métal catalytique ou un composé de métal catalytique du groupe VIB (groupe 6 de la nouvelle notation de la table périodique des éléments), de préférence le molybdène et le tungstène, de façon encore plus préférée le molybdène, et/ou éventuellement au moins un métal catalytique ou un composé de métal catalytique du groupe VIII (groupe 8, 9 et 10 de la nouvelle notation de la table périodique des éléments), de préférence le fer, le nickel ou le cobalt, de façon encore plus préférée le nickel.

Un tel catalyseur fait l'objet de la demande WO 9 856 499 A qui bénéficie de la même date de priorité.

Le support extrudé du catalyseur utilisé selon l'invention est généralement et de préférence essentiellement à base d'agglomérats d'alumine, lesdits agglomérats d'alumine sont généralement et de préférence obtenus par mise en forme d'une alumine de départ issue de la déshydratation rapide d'hydrargillite et présentent généralement un volume poreux total d'au moins 0,6 cm$^3$/g, un diamètre moyen mésoporeux compris entre 15 et 36 nm (nanomètres), et généralement un taux d'alumine issue de la décomposition de la boehmite compris ente 5 et 70% en poids. Par alumine issue de la décomposition de la boehmite, il faut comprendre qu'au cours du procédé de préparation des extrudés, de l'alumine type boehmite s'est développée au point de représenter 5 à 70 % en poids de l'alumine totale, puis a été décomposée. Ce taux d'alumine issue de la décomposition de boehmite est mesuré par diffraction des rayons X sur l'alumine avant décomposition de ladite boehmite.

Le support extrudé du catalyseur utilisé selon l'invention peut également être obtenu par extrusion d'un mélange en proportions variables d'une poudre d'alumine issue de la déshydratation rapide d'hydragillité (alumine flash, et d'au moins un gel d'alumine obtenu par exemple par précipitation de sels d'aluminium tels que le chlorure d'aluminium, le sulfate d'aluminium, le nitrate d'aluminium, l'acétate d'aluminium ou par hydrolyse d'alcoxydes d'aluminium tel que le triéthoxyde d'aluminium. De tels mélanges d'alumine flash et de gel d'alumine contiennent moins de 50% poids de gel d'alumine et de préférence de 1 à 45% poids de gel d'alumine.

Le catalyseur utilisé selon l'invention peut être préparé par toute méthode connue de l'homme du métier, et plus particulièrement suivant les méthodes décrites ci-après.

On utilise comme support des extrudés d'alumine de diamètre généralement compris entre 0,3 et 1,8 mm, de préférence entre 0,8 et 1,8 mm lorsque le catalyseur est mis en oeuvre en lit bouillonnant, lesdits extrudés présentant les caractéristiques décrites ci-dessus. Sur ces extrudés, ou avant mise en forme par extrusion, on peut éventuellement introduire par toute méthode connue, et à n'importe qu'elle étape de la préparation, de préférence par imprégnation ou comalaxage, les métaux catalytiques, à savoir éventuellement au moins un métal catalytique ou un composé de métal catalytique du groupe VIB (groupe 6 de la nouvelle notation de la table périodique des éléments), de préférence le molybdène et le tungstène, de façon encore plus préférée le molybdène, et/ou éventuellement au moins un métal catalytique ou un composé de métal catalytique du groupe VIII (groupe 8 de la nouvelle notation de la table périodique des éléments), de préférence le fer, le nickel ou le cobalt, de façon encore plus préférée le nickel. Lesdits métaux peuvent éventuellement être mélangés au support par comalaxage à toute étape du procédé de préparation dudit support. Lorsqu'il y en a plusieurs, lesdits métaux des groupes VIB et VIII peuvent éventuellement être introduits au moins en partie séparement ou de façon simultanée lors de l'imprégnation ou du comalaxage avec le support, à toute étape de la mise en forme ou de la préparation.

Par exemple, il est possible de préparer le catalyseur selon l'invention au moyen d'un procédé de préparation comprenant les étapes suivantes :

a) Comalaxage de poudre d'alumine issue de la déshydratation rapide d'hydrargillite avec au moins un composé de métal catalytique du groupe VIB, et/ou au moins un composé de métal catalytique du groupe VIII, suivie éventuellement d'ure maturation, et/ou d'un séchage, puis éventuellement une calcination.

b) Mise en forme par extrusion du produit obtenue à l'étape a.

Les métaux précités sont le plus souvent introduits sous forme de précurseurs tels que oxydes, acides, sels, complexes organiques, dans le catalyseur. La somme S des métaux des groupes VIB et VIII exprimés en oxydes introduits dans le catalyseurs est comprise entre 0,5 à 50% poids, de façon plus préférée de 0,5 à 40% poids. Il est donc possible selon l'invention d'utiliser le support en tant que catalyseur sans introduire de métal catalytique dans ledit catalyseur.

La préparation comprend ensuite généralement une maturation et un séchage, puis généralement un traitement thermique, par exemple une calcination, à une température comprise entre 400 et 800 degrés centigrades.

Le support dont l'emploi est un des éléments essentiels de l'invention est essentiellement à base d'alumine. Le support du catalyseur utilisé selon l'invention est généralement et de préférence obtenu par mise en forme d'une alumine de départ, issue de la déshydratation rapide d'hydrargillite, ladite mise en forme étant effectuée de préférence au moyen de l'un des procédés décrits ci-dessous.

Des procédés de préparation du support utilisé selon l'invention sont décrits ci-dessous, pour un support constitué d'alumine. Lorsque le support contient un ou plusieurs autres composés, il est possible d'introduire ledit ou lesdits composés ou un précurseur dudit ou desdits composés à n'importe qu'elle étape du procédé de préparation du support selon l'invention. Il est également possible d'introduire ledit ou lesdits composés par imprégnation de l'alumine mise en forme au moyen dudit ou desdits composés ou de tout précurseur dudit ou desdits composés.

Une premier procédé de mise en forme d'une alumine de départ issue de la déshydratation rapide d'hydrargillite comprend les étapes suivantes:

$a_1$. on part d'une alumine issue de la déshydratation rapide d'hydrargillite
$b_1$ on réhydrate l'alumine de départ,
$c_1$. on malaxe l'alumine réhydratée en présence d'une émulsion d'au moins un hydrocarbure dans l'eau,
$d_1$. on extrude la pâte à base d'alumine obtenue à l'étape $c_1$,
$e_1$. on sèche et on calcine les extrudés,
$f_1$. on soumet les extrudés issue de l'étape $e_1$ à un traitement hydrothermal acide en atmosphère confinée,
$g_1$. on sèche et calcine les extrudés issue de l'étape $f_1$.

Un deuxième procédé de mise en forme d'alumine à partir d'une alumine de départ issue de la déshydratation rapide d'hydrargillite, comprend les étapes suivantes :

$a_2$. on part d'une alumine de départ issue de la déshydratation rapide d'hydrargillite.
$b_2$ on met en forme l'alumine sous forme de billes en présence d'un porogène,
$c_2$. on fait mûrir les billes d'alumine obtenues,
$d_2$. on malaxe les billes issues de l'étape $c_2$ ce par quoi on obtient une pâte que l'on extrude,
$e_2$. on sèche et on calcine les extrudés obtenus,
$f_2$. on soumet les extrudés issue de l'étape $e_2$ à un traitement hydrothermal acide en atmosphère confinée,
$g_2$. on sèche et calcine les extrudés issus de l'étape $f_2$.

Un troisième procédé de mise en forme d'une alumine, à partir d'une alumine de départ issue de la déshydratation rapide d'hydrargillite comprend les étapes suivantes :

$a_3$ on part d'une alumine issue de la déshydratation rapide d'hydrargillite
$b_3$ on réhydrate l'alumine de départ
$c_3$ on malaxe l'alumine réhydratée avec un gel de pseudo-boehmite, ledit gel étant présent dans une teneur comprise entre 1 et 30% en poids par rapport à l'alumine réhydratée et au gel,
$d_3$ on extrude la pâte à base d'alumine obtenue à l'étape $c_3$
$e_3$ on sèche et on calcine les extrudés,
$f_3$ on soumet les extrudés issue de l'étape $e_3$ à un traitement hydrothermal acide en atmosphère confinée,
$g_3$ on sèche éventuellement, et on calcine les extrudés issus de l'étape $f_3$.

Ce procédé met en oeuvre les étapes identiques aux étapes $a_1$, $b_1$, $d_1$, $e_1$, $f_1$ et $g_1$ du premier procédé précédemment décrit.

Les extrudés d'alumine selon l'invention présentent généralement et de préférence un volume poreux total (VPT) d'au moins 0,6 cm$^3$/g, de préférence d'au moins 0,65.

Ce VPT est mesuré de la façon suivante : cn détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$VPT = \frac{1}{Dg} - \frac{1}{Da}.$$

Les extrudés selon l'invention présentent également généralement et de préférence un diamètre moyen mésoporeux compris entre 15 et 36 nm (nanomètres). Le diamètre moyen mésoporeux pour des extrudés donnés est mesuré sur la base de la représentation graphique de la répartition poreuse desdits extrudés. Il s'agit du diamètre dont le volume V associé sur la représentation graphique vaut :

$$V = V_{100nm} + \frac{V_{6nm} - V_{100nm}}{2}$$

avec :

$V_{100nm}$ représentant le volume créé par les pores de diamètre supérieur à 100 nm (macropores) ou volume macroporeux :
$V_{6nm}$ représentant le volume créé par les pores de diamètre supérieur à 6 nm.
$V_{6nm} - V_{100nm}$ représentant le volume mésoporeux i.e. le volume créé par les pores de diamètre compris entre 6 nm et 100 nm, c'est-à-dire le volume créé par tous les pores de taille comprise entre 6 nm et 100 nm (mésopores).

Ces volumes sont mesurés par la technique de la pénétration du mercure dans laquelle on applique la loi de Kelvin qui donne la relation entre la pression, le diamètre du plus petit pore dans lequel le diamètre pénètre à ladite pression, l'angle de mouillage et la tension superficielle selon la formule :

$\varnothing$ = (4t cosθ).10 /P dans laquelle
$\varnothing$ représente le diamètre du pore (nm),
t la tension superficielle (48,5 Pa),
θ l'angle de contact, (θ = 140 degrés) et

P la pression (MPa).

Les extrudés selon l'invention présentent un volume mésoporeux ($V_{6nm}$ - $V_{100nm}$) d'au moins 0,3 $cm^3$/g, voire d'au moins 0,5 $cm^3$/g.

Les extrudés selon l'invention présentent un volume macroporeux ($V_{100nm}$) d'au plus 0.5 $cm^3$/g. Selon une variante, le volume macroporeux ($V_{100nm}$) est d'au plus 0,3 $cm^3$/g, encore plus préférentiellement d'au plus 0,1 $cm^3$/g voire d'au plus 0,08 $cm^3$/g.

Ces extrudés présentent un volume microporeux ($V_{0-6nm}$) d'au plus 0,55 $cm^3$/g, de préférence d'au plus 0,2 $cm^3$/g. Le volume microporeux représente le volume créé par les pores de diamètre inférieur à 6 nm.

Une telle répartition poreuse qui minimise la proportion de pores inférieurs à 6 nm et de ceux supérieurs à 100 nm tout en augmentant la proportion des mésopores (dont le diamètre est compris entre 6 nm et 100 nm) est particulièrement adaptée aux contraintes diffusionnelles de l'hydrotraitement de coupes hydrocarbonnées lourdes.

Selon une variante préférée, la répartition poreuse sur le domaine de diamètre de pores compris entre 6 nm et 100 nm (mésopores) est extrêmement resserrée autour de 15 nm, c'est-à dire que sur ledit domaine, la majorité des pores ont un diamètre compris entre 6 nm et 50 nm, de préférence entre 8 nm et 20 nm.

Les extrudés selon l'invention présentent une surface spécifique (SS) d'au moins 120 $m^2$/g, de préférence d'au moins 150 $m^2$/g. Cette surface est une surface BET. On entend par surface BET, la surface spécifique déterminée par adsorption d'azote conformément à la norme ASTM D 3663-78 établie à partir de la méthode BRUNAUER - EMMETT - TELLER décrite dans le périodique "The Journal of the american Society", 60, 309 (1938).

On préfère les extrudés selon l'invention dont le diamètre est compris entre 0,3 et 1,8 mm, de préférence entre 0,8 et 1,8 mm, et la longueur comprise entre 1 et 20 mm, de préférence entre 1 et 10 mm, notamment lorsque ledit catalyseur est mis en oeuvre en lit bouillonnant.

Ces extrudés présentent en général un écrasement grain à grain (EGG) d'au moins 0,68 daN/mm pour des extrudés de diamètre 1,6 mm, de préférence d'au moins 1, et une résistance à l'écrasement (ESH) d'au moins 1 MPa. Par ailleurs le pourcentage de perte par attrition selon la norme ASTM D4050 desdits extrudés est généralement inférieur à 2,5% du poids du catalyseur.

La méthode de mesure de l'écrasement grain à grain (EGG) consiste à mesurer la forme de compression maximale que peut supporter un extrudé avant sa rupture, lorsque le produit est placé entre deux plans se déplaçant à la vitesse constante de 5 cm/min.

La compression est appliquée perpendiculairement à l'une des génératrices de l'extrudé, et l'écrasement grain à grain est exprimé comme le rapport de la force à la longueur de la génératrice de l'extrudé.

La méthode de mesure de la résistance à l'écrasement (ESH) consiste à soumettre une certaine quantité d'extrudés à une pression croissante au dessus d'un tamis et à récupérer les fines issues de l'écrasement des extrudés. La résistance à l'écrasement correspond à la force exercée pour obtenir un taux de fines représentant 0,5 % du poids des extrudés soumis au test. La méthode de mesure de la résistance à l'attrition selon la norme ASTM D4058 consiste à mettre en rotation un échantillon de catalyseur dans un cylindre. Les pertes par attrition sont alors calculées par la formule suivante :

% perte par attrition = 100 (1 - poids de catalyseur supérieur à 0,6 mm

après test/poids de catalyseur supérieur à 0,6 mm chargé dans le cylindre).

L'alumine utilisée selon l'invention est constituée essentiellement d'une pluralité d'agglomérats juxtaposés, chacun de ces agglomérats se présente généralement et de préférence en partie sous la forme d'empilements de feuillets et en partie sous la forme d'aiguilles, lesdites aiguilles étant uniformément dispersées à la fois autour des empilements de feuillets et entre les feuillets.

En général, la longueur et la largeur des feuillets varie entre 1 et 5 μm et leur épaisseur est de l'ordre de 10 nm. Ils peuvent être empilés par groupes formant une épaisseur de l'ordre de 0,1 à 0,5 μm, les groupes pouvant être séparés les uns des autres par épaisseur de l'ordre de 0,05 à 0,1 μm.

La longueur des aiguilles peut être comprise entre 0,05 et 0,5 μm ; leur section est de l'ordre de 10 à 20 nm. Ces dimensions sont données par mesure sur les photos des extrudés prises au microscope électronique. Les feuillets d'alumine comprennent principalement de l'alumine χ et de l'alumine η et les aiguilles de l'alumine γ.

La structure en feuillets est caractéristique de la filiation hydrargillite de l'alumine, ce qui signifie que ces extrudés avant activation par calcination présentent cette même structure, les feuillets étant de nature hydrargillite. Par calcination, cette alumine sous forme hydrargillite se transforme principalement en alumines déshydratées χ et η.

Par contre, la structure en aiguilles est caractéristique de la filiation boehmite, ce qui signifie que ces extrudés avant activation par calcination présentent cette même structure, les aiguilles étant de nature boehmite. Puis, par calcination, cette alumine sous forme boehmite se transforme en alumine déshydratée γ.

Les extrudés utilisés selon l'invention sont donc obtenus par calcination, les extrudés avant calcination étant constitués de feuillets à base d'alumine hydrargillite, lesdits feuillets étant entourés en périphérie des aiguilles à base d'alumine boehmite.

Le procédé de mise en forme du support ou du catalyseur utilisé selon l'invention convient plus particulièrement à une alumine de départ issue de la déshydratation rapide de l'hydrate de Bayer (hydrargillite) qui est un hydroxyde d'aluminium industriel facilement accessible et très bon marché.

Une telle alumine est notamment obtenue par déshydratation rapide d'hydrargillite à l'aide d'un courant de gaz chauds, la température d'entrée des gaz dans l'appareillage variant généralement de 400 à 1200 °C environ, le temps de contact de l'alumine avec les gaz chauds étant généralement compris entre une fraction de seconde et 4-5 seoondes ; un tel procédé de préparation de poudre d'alumine a particulièrement été décrit dans le brevet FR-A-1 108 011.

L'alumine ainsi obtenue peut être utilisée telle quelle ou peut subir avant l'étape $b_1$ un traitement pour éliminer notamment les alcalins présents: une teneur en $Na_2O$ inférieure à 0,5 % en poids peut être préférée.

De préférence, on réhydrate l'alumine de départ au cours de l'étape $b_1$ de manière à ce qu'elle présente un taux d'alumine de type boethmite d'au moins 3% en poids, de préférence d'au plus 40% en poids.

Les diverses étapes de ces procédés de préparation des extrudés d'alumine sont décrits de manière plus détaillés dans une demande de brevet de titre « Extrudés d'alumine, leurs procédés de préparation et leur utilisation comme catalyseurs ou supports de catalyseurs. » de Rhône Poulenc Chimie.

Les catalyseurs utilisés selon l'invention, peuvent ainsi, notamment, être utilisés dans tous les procédés d'hydroraffinage et d'hydroconversion de charges hydrocarbonées telles que les coupes pétrolières, les coupes issus du charbon, les extraits de sables bitumeux et de schistes bitumeux, ou les hydrocarbures produits à partir de gaz naturel et plus particulièrement pour l'hydrogénation, l'hydrodéazotation, l'hydrodéoxygénation, l'hydrodéaromatisation, l'hydroisomérisation, l'hydrodealkylation, l'hydrodéparaffinage, la deshydrogénation, l'hydrocraquage l'hydrodésulfuration et l'hydrodémétallisation de charges carbonnées contenant des composés aromatiques, et/ou oléfiniques, et/ou naphténiques, et/ou paraffiniques, lesdites charges contenant éventuellement des métaux, et/ou de l'azote, et'ou de l'oxygène, et/ou du soufre. Il est en particulier possible en modifiant les paramètres de préparation du support, essentiellement à base d'alumine, d'obtenir différentes distributions poreuses et ainsi de modifier les taux d'hydrodésulfuration (HDS) et d'hydrodémétallation (HDM).

Les réactions d'hydroraffinage et d'hydroconversion de charges hydrocarbonées (hydrotraitement) peuvent être réalisées dans un réacteur contenant le catalyseur utilisé selon l'invention mis en oeuvre en lit bouillonnant. Lesdits hydrotraitements peuvent être appliqués par exemple aux fractions pétrolières telles que les pétroles bruts de degré API inférieur à 20, les extraits de sables bitumeux et de schistes bitumeux, les résidus atmosphériques, les résidus sous vide, les asphaltes, les huiles désasphaltées, les résidus sous vide désasphaltés, les bruts désasphaltés, les fuels lourds, les distillats atmosphériques et les distillats sous vide, ou encore à d'autres hydrocarbures tels que les liquéfiats du charbon. Dans un procédé en lit bouillonnant, les hydrotraitements destinés à éliminer les impuretés telles que le soufre, l'azote, les métaux, et à abaisser le point d'ébullition moyen de ces hydrocarbures sont habituellement mis en oeuvre à une température d'environ 320 à environ 470 degrés C, de préférence environ 400 à environ 450 degrés C, sous une pression partielle d'hydrogène d'environ 3 MPa (méga Pascal) à environ 30 MPa, de préférence 5 à 20 Mpa, à une vitesse spatiale d'environ 0,1 à environ 6 volumes de charge par volume de catalyseur et par heure, de préférence 0,5 à 2 volumes par volume de catalyseur et par heure, le rapport hydrogène gazeux sur charge liquide d'hydrocarbures étant compris entre 100 et 3000 normaux mètres cubes par mètre cube ($Nm^3/m^3$), de préférence entre 200 et 1200 ($Nm^3/m^3$).

Les exemples donnés ci-après illustrent l'invention sans en limiter la portée.

## Exemple 1

### Préparation du support alumine A rentrant dans la composition des catalyseurs A1 et A2 selon l'invention.

**Étape $a_1$ - Alumine de départ -** La matière première est de l'alumine obtenue par décomposition très rapide de l'hydrargillite dans un courant d'air chaud (T = 1000 °C). Le produit obtenu est constitué d'alumines de transition : alumine (khi) et (rho). La surface spécifique est de 300 $m^2/g$ et la perte au feu (PAF) de 5 %.

**Étape $b_1$** - **Réhydratation -** L'alumine est soumise à une réhydratation par mise en suspension dans l'eau à une concentration de 500 g/l à une température de 90 °C pendant une durée de 48 h en présence de 0,5 % d'acide citrique.

Après filtration de la suspension, on récupère un gâteau d'alumine qui est lavé à l'eau puis séché à une température de 140 °C pendant 24 h.

L'alumine obtenue est sous forme de poudre, sa perte au feu (PAF), mesurée par calcination à 1000°C, et son taux d'alumine sous forme boehmite, mesuré par diffraction des rayons X, sont rassemblés dans le tableau 1.

**Étape c$_1$ Malaxage -** On introduit 10 kg de la poudre réhydratée et séchée dans un malaxeur bras en Z de volume 25 l, puis on ajoute peu à peu une émulsion d'hydrocarbure dans l'eau stabilisée par un agent tensioactif, préalablement obtenue dans un réacteur agité, et de l'acide nitrique à 100 %. Les caractéristiques sont rassemblées dans le tableau 1.

Le malaxage est prolongé jusqu'à l'obtention d'une pâte homogène consistante.

A la fin du malaxage, on ajoute une solution d'ammoniaque à 20 % de façon à neutraliser l'excès d'acide nitrique tout en poursuivant le malaxage pendant 3 à 5 min.

**Étape d$_1$ - Extrusion -** La pâte obtenue est introduite dans une extrudeuse monovis pour l'obtention d'extrudés crus de diamètre 1 mm.

**Étape e$_1$ - Séchage/calcination -** Les extrudés sont ensuite séchés à 140 °C pendant 15 h et calcinés pendant 2 h à une température indiquée dans le tableau 1. Le support ainsi calciné présente une surface spécifique ajustable entre 200 m2/g et 130 m2/g comme indiqué dans le tableau 1.

**Étape f$_1$ - Traitement hydrothermal -** Les extrudés obtenus sont imprégnés par une solution d'acide nitrique et d'acide acétique dans les concentrations suivantes : 3,5 % d'acide nitrique par rapport au poids d'alumine et 6,5 % d'acide acétique par rapport au poids d'alumine. Puis ils sont soumis à un traitement hydrothermal dans un autoclave à panier rotatif dans les conditions définies dans le tableau 1.

**Étape g$_1$ - Séchage/calcination -** A la fin de ce traitement les extrudés sont soumis à une calcination à une température de 550 °C pendant 2 h.

Les caractéristiques des extrudés obtenus sont rassemblées dans le tableau 1.

Le taux de boehmite est mesuré sur les extrudés avant calcination finale.

Tableau 1

| | Alumine A | Alumine B | Alumine C |
|---|---|---|---|
| **Alumine réhydratée - Fin étape a1** | | | |
| % boehmite | 33 | 24 | 33 |
| PAF (1000°C) | 25 | 25 | 23 |
| **Malaxage - Étape b1** | | | |
| Nature hydrocarbure | pétrole | pétrole | pétrole |
| % $HNO_3/Al_2O_3$ | 10 | 10 | 10 |
| % hydrocarbure/$Al_2O_3$ | 5 | 15 | 15 |
| eau/hydrocarbure | 3,7 | 3,5 | 2,6 |
| Nature agent tensio-actif | Galoryl EM10 | Galoryl EM10 | Soprophor SC138 |
| % agent tensio-actif/hydrocarbure | 150 | 17 | 15 |
| % neutralisation par rapport à $HNO_3$ en équiv. | 65 | 65 | 65 |
| **Séchage/calcination - Etape d1** | | | |
| Température calcination (°C) | 600 | 680 | 600 |
| Surface spécifique (m$^2$/g) | 260 | 148 | 177 |
| **Traitement hydrothermal - Étape e1** | | | |
| Température (°C) | 212 | 212 | 178 |
| Pression (bar) | 19 | 19 | 10 |
| Temps (h) | 2 | 2 | 2 |
| % boehmite | 45 | 40 | 9 |
| **Caractéristiques des extrudés calcinés obtenus** | | | |
| VPT (cm$^3$/g) | 0,86 | 0,80 | 0,64 |
| Vcorrespondant à <Dp<100 nm (cm$^3$/g) | 0,62 | 0,59 | 0,50 |
| V correspondant à Dp>100 nm (cm$^3$/g) | 0,28 | 0,19 | < 0,02 |

Tableau 1   (suite)

| | Alumine A | Alumine B | Alumine C |
|---|---|---|---|
| Caractéristiques des extrudés calcinés obtenus | | | |
| diam. moyen mésopores(nm) | 8,5 | 28 | 16 |
| V correspondant à Dp<6 nm (cm$^3$/g) | 0,01 | 0,02 | 0,14 |
| SS (m$^2$/g) | 300 | 140 | 174 |
| EGG (daN/mm) | 0,9 | 1,2 | 0,7 |
| ESH (MPa) | 1,2 | 1,58 | 1,45 |

### Exemple 2

### Préparation du catalyseur A1. (selon l'invention)

Nous avons imprégné à sec le support extrudé de l'exemple 1 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$. Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 12,5% poids et celle en oxyde de nickel NiO est de 3,0% poids.
La résistance à l'attrition du catalyseur est évaluée en tambour tournant par la méthode normée ASTM D4058. Les pertes par attrition sont alors calculées par la formule suivante:

% perte par attrition = 100 (1 - poids de catalyseur supérieur à 0,6 mm après test/poids de catalyseur supérieur à 0,6 mm chargé dans le cylindre).

Le catalyseur A1 conduit par ce test à un pourcentage de perte par attrition de 0,30% du poids du catalyseur.

### Exemple 3

### Préparation du catalyseur A2. (selon l'invention)

Nous avons imprégné à sec le support extrudé de l'exemple 1 par une solution aqueuse renfermant des sels de molybdène. Le sel de molybdène est l'heptamolybdate d'ammonium $Mo_7O_{24}(NH_4)_6.4H_2O$. Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 12,8%.
Le catalyseur A2 conduit, par le test d'attrition décrit dans l'exemple 2, à un pourcentage de perte par attrition de 0,32% du poids du catalyseur.

### Exemple 4

### Préparation du support alumine B rentrant dans la composition du catalyseur B selon l'invention.

L'alumine constituant ce support a été préparée à partir du même enchaînement d'étapes que l'alumine du support A mais en utilisant des conditions différentes au cours de l'étape de malaxage et de séchage/calcination après extrusion (voir tableau 1).
Les caractéristiques des extrudés obtenus sont rassemblées dans le tableau 1.
Le taux de boehmite est mesuré sur les extrudés avant calcination finale.

### Exemple 5

### Préparation du catalyseur B (selon l'invention)

Nous avons imprégné à sec le support extrudé de l'exemple 4 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$. Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 6,5% poids et celle en oxyde de nickel NiO est de 1,5% poids.

Le catalyseur **B** conduit, par le test d'attrition décrit dans l'exemple 2, à un pourcentage de perte par attrition de 0,50% du poids du catalyseur.

### Exemple 6

**Préparation du support alumine C rentrant dans la composition des catalyseurs C1 et C2 selon l'invention.**

On met en oeuvre les mêmes étapes que dans l'exemple 1 si ce n'est que l'étape **b1** de malaxage est mise en oeuvre de la manière suivante.

**Étape b$_1$ - Malaxage -** Il s'agit d'un procédé continu en malaxeur bivis co-rotatives.

En amont du malaxeur, on introduit la poudre d'alumine réhydratée et séchée à un débit de 90 kg/h. Dans un réacteur agité, on prépare une émulsion de pétrole dans l'eau, en introduisant :

- 5,46 kg d'eau,
- 10,04 kg d'acide nitrique à 69 %,
- 10,4 kg de pétrole,
- 1,56 kg de Soprophor SC138.

Cette émulsion est introduite à raison de 27,46 kg/h dans le fourreau de la machine bivis qui suit immédiatement l'introduction de la poudre d'alumine.

En fin de machine, on introduit une solution d'ammoniaque à 28 % à raison de 4,34 kg/h.

Le temps de passage de la poudre dans la machine est de l'ordre de 50 à 60 s.

A la sortie de la machine, on obtient une pâte homogène qui peut être extrudée.

Les caractéristiques des extrudés obtenus sont rassemblées dans le tableau 1.

Le taux de boehmite est mesuré sur les extrudés avant calcination finale.

### Exemple 7

**Préparation du catalyseur C1.** (selon l'invention)

Nous avons imprégné à sec le support extrudé de l'exemple 6 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$. Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 13,0% poids et celle en oxyde de nickel NiO est de 3,2% poids.

Le catalyseur C1 conduit, par le test d'attrition décrit dans l'exemple 2, à un pourcentage de perte par attrition de 0,35% du poids du catalyseur.

### Exemple 8

**Préparation du catalyseur C2.** (selon l'invention)

Nous avons imprégné à sec le support extrudé de l'exemple 6 par une solution aqueuse renfermant des sels de nickel. Le sel de nickel est le nitrate de nickel $Ni(NO_3)_2.6H_2O$. Après maturation à température ambiante dans une atmosphère saturée en eau, les extrudés imprégnés sont séchés une nuit à 120°C puis calcinés à 550°C pendant 2 heures sous air. La teneur finale en oxyde de nickel NiO est de 5.9% poids.

Le catalyseur C2 conduit, par le test d'attrition décrit dans l'exemple 2, à un pourcentage de perte par attrition de 0,33% du poids du catalyseur.

### Exemple 9

**Préparation du support alumine D rentrant dans la composition du catalyseur D (comparatif)**

L'alumine constituant le support D a été préparée selon le même protocole que le support A si ce n'est que l'étape e1 de traitement hydrothermal a été supprimée.

Les caractéristiques des extrudés calcinés sont rassemblées dans le tableau 2.

Tableau 2

| | Alumine D |
|---|---|
| VPT ($cm^3$/g) | 0,82 |
| V correspondant à 6<Dp<100 nm ($cm^3$/g) | 0,08 |
| V correspondant à Dp>100nm ($cm^3$/g) | 0,38 |
| diam. moyen mésopores (nm) | 5,8 |
| V correspondant à Dp<6 nm ($cm^3$/g) | 0,33 |
| SS ($m^2$/g) | 228 |
| EGG (daN/mm) | 0,7 |
| ESH (MPa) | 0,6 |

## Exemple 10

### Préparation du catalyseur D (comparatif)

Nous avons imprégné à sec le support extrudé de l'exemple 9 par une solution aqueuse renfermant des sels de molybdène et de nickel. Le sel de molybdène est l'heptamolybdate d'ammonium $Mo_7O_{24}(NH_4)_6.4H_2O$ et celui de nickel est le nitrate de nickel $Ni(NO_3)_2.6H_2O$. Après maturation à température ambiante dans une atmosphère saturée en eau, les extrudés imprégnés sont séchés une nuit à 120°C puis calcinés à 550°C pendant 2 heures sous air. La teneur finale en trioxyde de molybdène est de 10,2% poids et celle en oxyde de nickel NiO est de 2,5% poids.
Le catalyseur D conduit, par le test d'attrition décrit dans l'exemple 3, à un pourcentage de perte par attrition de 0,6% du poids du catalyseur.

## Exemple 11

### Tests d'hydroconversion de résidus pétroliers par les catalyseurs A1, A2, B, C1, C2 et D

Les catalyseurs A1, A2, B, C1, C2 et D précédemment décrits ont été comparés dans une unité pilote comportant un réacteur tubulaire équipé d'un dispositif permettant le maintien en ébullition permanent du catalyseur à l'intérieur du réacteur. L'unité pilote mise en oeuvre est représentative d'une unité industrielle H-Oil d'hydroconversion de résidus en lits bouillonnants décrite dans de nombreux brevets, par exemple les brevets US 4521295, US 4495060.
On charge le réacteur du pilote avec 1 litre de catalyseur sous forme extrudé tel que décrit précédemment. Une fois en régime de lit bouillonnant, le catalyseur expansé occupe un volume de 1,5 l dans le réacteur.
La charge utilisée est un résidu sous vide Arabe lourd dont les caractéristiques sont regroupées dans le tableau suivant.

| | | RSV Arabe lourd |
|---|---|---|
| Densité 15/4 | | 1.0457 |
| Viscosité à 100 °C | $mm^2$/s | 5110 |
| Viscosité à 150 °C | $mm^2$/s | 285 |
| | | |
| Soufre | % pds | 5.39 |
| Azote | % pds | 0.46 |
| Nickel | ppm | 50 |
| Vanadium | ppm | 163 |
| Carbone | % pds | 84.5 |
| Hydrogène | % pds | 9.56 |
| | | |
| Carbone aromatique | % | 37.9 |

(suite)

| | | RSV Arabe lourd |
|---|---|---|
| Masse moléculaire | g/mol | 1060 |
| Carbone Conradson | % pds | 24 |
| Asphaltènes C5 | % pds | 24.7 |
| Asphaltènes C7 | % pds | 14.5 |
| | | |
| **SARA** | % pds | |
| Saturés | % pds | 7,2 |
| Aromatiques | % pds | 38.2 |
| Résines | % pds | 37.1 |
| Asphaltènes | % pds | 14.5 |
| | | |
| **Distillation simulée** | | |
| PI | $^\circ$C | 404 |
| 5% | $^\circ$C | 510 |
| 10% | $^\circ$C | 545 |
| 20% | $^\circ$C | 585 |
| PF | $^\circ$C | 613 |
| % dist | % pds | 29 |
| | | |
| Point de ramollissement | $^\circ$C | 49 |

On opère l'unité avec le résidu pétrolier décrit ci dessus dans les conditions opératoires suivantes :

- pression = 160 bars
- débit d'hydrogène : 600 std I. $H_2$ /l. de charge
- vitesse spatiale horaire = 0.3 $m^3$ de charge / $m^3$ de réacteur / $h^{-1}$

La température est ajustée aux alentours de 420 - 430$^\circ$C de façon à ce que tous les catalyseurs conduisent à 65% poids de conversion de la fraction 550$^\circ$C$^+$.
Les performances en HDS et en HDM sont comparées au bout de 2 semaines de test.
Le taux d'HDS est défini de la façon suivante :

HDS (% pds) = ((%pds S)charge-(%pds S)recette)/(%pds S)charge * 100

Le taux d'HDM est défini de la façon suivante :

HDM (% pds) = ((ppm pds Ni+V)charge - (ppm pds Ni+V)recette)/(ppm pds

Ni+V)charge * 100

Le taux de conversion est défini de la façon suivante :

Conversion (% pds) = ((% pds de 550$^\circ$C+)charge - (% pds de

550$^\circ$C+)recette)/(% pds de 550$^\circ$C+)charge * 100

Pour évaluer la stabilité des produits obtenus, une mesure selon la méthode "P Value Shell" est effectuée sur la fraction 350$^\circ$C+ de l'effluent récupéré après test.
Le tableau suivant compare les valeurs d'HDS, d'HDM et de P Value Shell obtenu avec les catalyseurs A1, A2, B, C1, C2 et D pour 65% poids de conversion de la fraction 550°C⁺.

| Catalyseur | HDS (% poids) | HDM (% poids) | P value Shell |
|---|---|---|---|
| Catalyseur A1 | 82 | 85 | 1,1 |
| Catalyseur A2 | 78 | 82 | 1,1 |
| Catalyseur B | 72 | 92 | 1,2 |
| Catalyseur C1 | 84 | 85 | 1,4 |
| Catalyseur C2 | 78 | 83 | 1,2 |
| Catalyseur D | 72 | 78 | 1,1 |

Il apparaît donc que les catalyseurs sous forme d'extrudés de la présente invention peuvent atteindre des taux de conversion de la fraction 550°C⁺ d'un résidu pétrolier important tout en conduisant à des produits stables. Ces catalyseurs permettent également d'hydrodésulfurer et d'hydrodémétalliser de façon significative le résidu et de produire des fractions légères (diesel, essence) répondant aux spécifications des raffineurs. En jouant sur les paramètres de préparation de l'alumine, il est possible d'obtenir différentes distributions poreuses et ainsi de modifier les taux d'HDS, d'HDM, et certaines qualités pétrolières des effluents de l'unité tel que la stabilité de la fraction résiduelle du 350°C⁺.

**Revendications**

1.  Utilisation dans un procédé d'hydrotraitement d'une charge d'hydrocarbure d'un catalyseur mis en oeuvre en lit bouillonnant, comprenant un support extrudé essentiellement à base d'alumine, et constitué essentiellement d'une pluralité d'agglomérats juxtaposés, éventuellement au moins un métal catalytique ou un composé de métal catalytique du groupe VIB (groupe 6 de la nouvelle notation de la table périodique des éléments), et/ou éventuellement au moins un métal catalytique ou un composé de métal catalytique du groupe VIII (groupe comprenant le nickel, le fer et le cobalt) de la nouvelle notation de la table périodique des éléments), dans lequel la somme S des métaux des groupes VIB et VIII exprimés en oxydes est comprise entre 0,5% et 50% poids, ledit support extrudé étant issu d'un procédé de mise en forme d'une alumine de départ comprenant soit les étapes suivantes :

    - a1 ou a3: on part d'une alumine issue de la déshydratation rapide d'hydrargillite.
    - b1 ou b3: on réhydrate l'alumine de départ.
    - c1: on malaxe l'alumine réhydratée en présence d'une émulsion d'au moins un hydrocarbure dans l'eau ou bien c3: on malaxe l'alumine réhydratée avec un gel de pseudo-boehmite ledit gel étant présent dans une teneur comprise entre 1 et 30% en poids par rapport à l'alumine réhydratée et au gel, pour obtenir une pâte.
    - d1 ou d3: on extrude la pâte à base d'alumine obtenue.
    - e1 ou e3: on sèche et on calcine les extrudés,
    - f1 ou f3: on soumet les extrudés calcinés à un traitement hydrothermal acide en atmosphère confinée,
    - g1 ou g3: on sèche et calcine les extrudés issus dudit traitement hydrothermal acide en atmosphère confinée,

    soit les étapes ci-après:

    - $a_2$ on part d'une alumine issue de la déshydratation rapide d'hydrargillite.
    - $b_2$. on met en forme l'alumine sous forme de billes en présence d'un porogène,
    - $c_2$. on fait murir les billes d'alumine obtenues,
    - $d_2$. on malaxe les billes issues de l'étape $c_2$ ce par quoi on obtient une pâte que l'on extrude,
    - $e_2$. on sèche et on calcine les extrudés obtenus,
    - $f_2$. on soumet les extrudés issue de l'étape $e_2$ à un traitement hydrothermal acide en atmosphère confinée,
    - $g_2$. on sèche et calcine les extrudés issus de l'étape $f_2$,

    ce support présentant un taux d'alumine issue de la décomposition de boehmite compris entre 5 et 70% poids, un volume poreux total d'au moins 0,6 cm3/g, des mésopores présentant un diamètre moyen compris entre 15 et 36 nanomètres, un volume mésoporeux $V_{6nm}$ - $V_{100nm}$ d'au moins 0,3 cm3/g, un volume macroporeux $V_{100nm}$ d'au plus 0,5 cm3/g, un volume microporeux $V_{0-6nm}$ d'au plus 0,55 cm3/g, et une surface spécifique d'au moins 120 m²/g, chacun desdits agglomérats se présentant en partie sous la forme d'empilements de feuillets et en partie sous la forme d'aiguilles, lesdites aiguilles étant uniformément dispersées à la fois autour des empilements de feuillets et entre les feuillets.

2. Utilisation selon la revendication 1 dans laquelle ledit support extrudé est issu d'un procédé de préparation comprenant les étapes a1, b1, c1, d1, e1, f1, g1, et dans laquelle l' alumine issue de l'étape b1 comprend au moins 3% poids de boehmite,

3. Utilisation selon l'une quelconque des revendications 1 ou 2 dans laquelle ledit catalyseur comprend au moins un métal catalytique ou un composé de métal catalytique du groupe VIII et au moins un métal catalytique ou un composé de métal catalytique du groupe VIB, et ces métaux sont introduits au moins en partie séparement ou de façon simultanée lors d'une l'imprégnation ou d'un comalaxage avec le support.

4. Utilisation selon l'une quelconque des revendications 1 à 3, dans laquelle le catalyseur comprend au moins un métal catalytique ou composé de métal catalytique du groupe VIB, ledit métal ou composé de métal du groupe VIB est le molybdène ou le tungstène, et le métal catalytique ou composé de métal catalytique du groupe VIII est le fer, le nickel ou le cobalt.

5. Utilisation selon l'une quelconque des revendications 1 à 4, dans laquelle le catalyseur comprend au moins un métal catalytique ou composé de métal catalytique du groupe VIB, ledit métal ou composé de métal du groupe VIB est le molybdène, et le métal catalytique ou composé de métal catalytique du groupe VIII est le nickel.

6. Utilisation selon l'une quelconque des revendications 1 à 5, dans laquelle les extrudés d'alumine ont un diamêtre compris entre 0,3 et 1,8 mm.

7. Utilisation selon l'une quelconque des revendications 1 à 6, pour l'hydrodésulfuration et l'hydrodémétallisation de charges carbonnées contenant des composés aromatiques, et/ou oléfiniques, et/ou naphténiques, et/ou paraffiniques, lesdites charges contenant du soufre, des métaux, et éventuellement de l'azote, et/ou de l'oxygène.

8. Utilisation selon l'une quelconque des revendications 1 à 7, pour l'hydrodésulfuration de charges carbonnées contenant des composés aromatiques, et/ou oléfiniques, et/ou naphténiques, et/ou paraffiniques, lesdites charges contenant du soufre, et éventuellement de l'azote, et/ou de l'oxygène.

9. Utilisation selon l'une quelconque des revendications 1 à 8, dans laquelle le procédé d'hydrotraitement est mis en oeuvre à une température d'environ 320 à environ 470 °C, sous une pression partielle d'hydrogène d'environ 3 MPa à environ 30 MPa, à une vitesse spatiale d'environ 0,1 à environ 6 volumes de charge par volume de catalyseur et par heure, le rapport hydrogène gazeuse sur charge liquide d'hydrocarbures étant compris entre 100 et 3000 normaux mètres cubes par mètre cube ($Nm^3/m^3$).

**Patentansprüche**

1. Verwendung eines in schäumender Schicht eingesetzten Katalysators in einem Verfahren der Hydrierung einer Kohlenwasserstoffbeschickung, ein extrudiertes Basismaterial im wesentlichen auf Basis eines Aluminiumoxids und im wesentlichen bestehend aus einer Vielzahl von verbundenen Konglomeraten, gegebenenfalls mindestens eines katalytischen Metalls oder einer Verbindung aus katalytischen Metallen aus der Gruppe VIB (Gruppe 6 der neuen Schreibweise des Periodensystems der Elemente), und/oder gegebenenfalls mindestens ein katalytisches Metall oder eine Verbindung aus katalytischen Metallen aus der Gruppe VIII (die Nickel, Eisen und Kobalt umfassende Gruppe) der neuen Schreibweise des Periodensystems der Elemente), bei welchem die in Oxiden ausgedrückte Summe S der Metalle aus der Gruppe VIB und VIII zwischen 0,5% und 50 Gewichts-% liegt, wobei das besagte extrudierte Basismaterial aus einem Verfahren zur Darstellung eines Ausgangs-Aluminiumoxids herrührt, welches entweder die folgenden Schritte:

- a1 oder a3: man geht von einem aus der schnellen Dehydratisierung von Hydrargillit stammenden Aluminiumoxid aus.

- b1 oder b3: man rehydratisiert das Ausgangs-Aluminiumoxid.

- c1: man durchknetet das rehydratisierte Aluminiumoxid in Anwesenheit von einer Emulsion aus mindestens einem Kohlenwasserstoff im Wasser oder auch c3: man durchknetet das rehydratisierte Aluminiumoxid mit einem Gel aus Pseudo-Boehmit, wobei das besagte Gel mit einem zwischen 1 und 30 Gewichts-% liegenden Anteil im Verhältnis zu dem rehydratisierten Aluminiumoxid und zum Gel vorhanden ist, um eine breiartige Masse zu erhalten.

- d1 oder d3: man extrudiert die erhaltene breiartige Masse auf Aluminiumoxid-Basis.

- e1 oder e3: man trocknet und kalziniert die Extrusionen,

- f1 oder f3: man unterwirft die kalzinierten Extrusionen einer sauren hydrothermalen Behandlung in stickiger Atmosphäre.

- g1 oder g3: man trocknet und kalziniert die Extrusionen aus der besagen sauren hydrothermalen Behandlung in stickiger Atmosphäre,

oder die nachfolgenden Schritte umfaßt:

- a2 man geht von einem aus der schnellen Dehydratisierung von Hydrargillit stammenden Aluminiumoxid aus.

- b2. man stellt das Aluminiumoxid in Form von kleinen Kugeln in Anwesenheit eines Schaumerzeugers dar,

- c2. man läßt die erhaltenen kleinen Kugeln aus Aluminiumoxid reifen,

- d2. man durchknetet die kleinen Kugeln aus dem Schritt c2, wodurch man eine breiartige Masse erhält, welche man extrudiert.

- e2. man trocknet und man kalziniert die erhaltenen Extrusionen,

- f2. man unterzieht die Extrusionen aus dem Schritt e2 einer sauren hydrothermalen Behandlung in stickiger Atmosphäre

- g2. man trocknet und kalziniert die aus dem Schritt f2 erhaltenen Extrusionen,

wobei dieses Basismaterial einen Grad an aus der Zersetzung von Boehmit stammenden Aluminiumoxids zwischen 5 und 70 Gewichts-%, eine Gesamtporenvolumen von mindestens 0,9 cm3/g, Kleinporen mit einem mittleren Durchmesser zwischen 15 und 36 Nanometern, ein Kleinporen-Volumen $V_{6nm}$ - $V_{100nm}$ von mindestens 0,3cm$^3$/g, ein Makroporenvolumen $V_{100nm}$ von höchstens 0,5 cm3/g, ein Mikroporenvolumen $V_{0,-6nm}$ von höchstens 0,55 cm$^3$/g, eine spezifische Oberfläche von mindestens 120 m2/g aufweist, wobei jedes der Konglomerate zum Teil in Form von Stapeln von Lamellen und zum Teil in Form von Nadeln auftritt, wobei die besagten Nadeln teilweise gleichmäßig zugleich um die Stapel herum und zwischen den Lamellen verteilt sind.

2. Verwendung gemäß dem Anspruch 1, in welcher das besagte extrudierte Basismaterial aus einem Herstellungsverfahren stammt, welches die Schritte a1, b1, c1, d1, e1, f1, g1 umfaßt und in welchem das aus dem Schritt b1 stammende Aluminiumoxid mindestens 3 Gewichts-% Boehmit umfaßt.

3. 3. Verwendung gemäß irgend einem der Ansprüche 1 oder 2, bei welcher der besagte Katalysator mindestens ein katalytisches Metall oder eine Verbindung eines katalytischen Metalls aus der Gruppe VIII und mindestens eine Verbindung eines katalytischen Metalls der Gruppe VIB umfaßt, und diese Metalle zumindest zum Teil getrennt oder gleichzeitig während einer Tränkung oder einer Durchknetung mit dem Basismaterial eingeleitet werden

4. Verwendung gemäß irgendeinem der Ansprüche 1 bis 3, bei welcher der Katalysator mindestens ein katalytisches Metall oder eine Verbindung eines katalytischen Metalls aus der Gruppe VIB umfaßt, wobei das besagte Metall oder die Verbindung eines Metalls der Gruppe VIB Molbydän oder Wolfram ist, und das katalytische Metall oder die Verbindung eines katalytischen Metalls der Gruppe VIII Eisen, Nickel oder Kobalt ist.

5. Verwendung gemäß irgend einem der Ansprüche 1 bis 4, bei welchem der Katalysator mindestens ein katalytisches Metall oder eine Verbindung eines katalytischen Metalls aus der Gruppe VIB umfaßt, wobei das Metall oder Verbindung eines katalytischen Metalls der Gruppe VIB Molybdän ist und das katalytische Metall oder Verbindung eines katalytischen Metalls aus der Gruppe VIII Nickel ist.

**6.** Verwendung gemäß irgend einem der Ansprüche 1 bis 5, bei welcher die Aluminiumoxid-Extrusionen einen Durchmesser zwischen 0,3 und 1,8 mm haben.

**7.** Verwendung gemäß irgend einem der Ansprüche 1 bis 6, für die Wasserstoffentschwefelung und Wasserstoff-Entmetallisierung von kohlenstoffhaltigen Beschickungen, welche aromatische und/oder olefinische und/oder naphthenische und/oder paraffinische Verbindungen enthalten, wobei die besagten Beschickungen Schwefel, Metalle und gegebenenfalls Stickstoff und/oder Sauerstoff enthalten.

**8.** Verwendung gemäß irgend einem der Ansprüche 1 bis 7, für die Wasserstoffentschwefelung von kohlenstoffhaltigen Beschickungen, welche aromatische und/oder olefinische und/oder naphthenische und/oder paraffinische Verbindungen enthalten, wobei die besagten Beschickungen Schwefel, und gegebenenfalls Stickstoff und/oder Sauerstoff enthalten.

**9.** Verwendung gemäß irgend einem der Ansprüche 1 bis 8, bei welcher das Verfahren zur Hydrierung bei einer Temperatur von ungefähr 320 bis ungefähr 470 °C, unter einem Wasserstoffpartialdruck von ungefähr 3 MPa bis ungefähr 30 MPa, bei einer Raumgeschwindigkeit von ungefähr 0,1 bis ungefähr 6 Beschickungsvolumen pro Katalysatorvolumen und pro Stunde durchgeführt wird, wobei das Verhältnis gasförmiger Wasserstoff zu flüssiger Kohlenwasserstoffbeschickung in dem Intervall zwischen 100 und 3000 Normalkubikmetern pro Kubikmeter ($Nm^3/m^3$) enthalten ist.

**Claims**

**1.** Use in a process for hydrotreating a hydrocarbon feed of a catalyst used in an ebullating bed, the catalyst comprising an essentially alumina-based extruded support, essentially constituted by a plurality of juxtaposed agglomerates, optionally at least one catalytic metal or a compound of a catalytic metal from group VIB (group 6 of the new elements periodic table notation) and/or optionally, at least one catalytic metal or a compound of a catalytic metal from group VIII (group comprising nickel, iron and cobalt) of the new elements periodic table notation), in which the sum S of the group VIB and VIII metals, expressed as the oxides, is in the range 0.5% to 50% by weight, said extruded support being obtained by a starting alumina forming process comprising:
either the following steps:

- a1 or a3: starting with an alumina originating from rapid dehydration of hydrargillite;
- b1 or b3: rehydrating the starting alumina;
  c1 mixing the rehydrated alumina in the presence of an emulsion of at least one hydrocarbon in water, or c3: mixing the rehydrated alumina with a pseudo-boehmite gel, said gel being present in an amount in the range 1% to 30% by weight with respect to the rehydrated alumina and the gel, so as to obtain a paste;
  d1 or d3: extruding the alumina-based paste obtained;
  e1 or e3: drying and calcining the extrudates;
  f1 or f3: carrying out a hydrothermal acid treatment in a confined atmosphere on the calcined extrudates;
  g1 or g3: drying and calcining the extrudates from said hydrothermal acid treatment in a confined atmosphere;
  or the following steps:

  a2: starting from an alumina originating from rapid dehydration of hydrargillite;
  b2: forming the alumina into beads in the presence of a pore-forming agent;
  c2: ageing the alumina beads obtained;
  d2: mixing the beads from step c2 to obtain a paste which is extruded;
  e2: drying and calcining the extrudates obtained;
  f2: carrying out a hydrothermal acid treatment in a confined atmosphere on the extrudates from step e2;
  g2: drying and calcining the extrudates from step e2,

said support having a ratio of alumina from boehmite decomposition in the range 5% to 70% by weight, a total pore volume of at least 0.6 $cm^3/g$, and mesopores with an average diameter in the range 15 to 36 nm, a mesoporous volume $V_{6nm}$ - $V_{100nm}$ of at least 0.3 $cm^3/g$, a macroporous volume $V_{100nm}$ of at most 0.5 $cm^3/g$, a microporous volume $V_{0-6nm}$ of at most 0.55 $cm^3/g$, and a specific area of at least 120 $m^2/g$., each of said agglomerates being partly in the form of packs of flakes and partly in the form of needles, said needles being uniformly dispersed both about the packs of flakes and between the flakes.

2. Use according to claim 1, in which said extruded support is obtained by a preparation process comprising the steps a1, b1, c1, d1, e1, f1, g1, and in which the alumina from b1 comprises at least 3% weight of boehmite.

3. Use according to any one of claims 1 or 2, in which said catalyst comprises at least one catalytic metal or compound of a catalytic metal from group VIII and at least one catalytic metal or compound of a catalytic metal from group VIB, and said metals are introduced at least in part separately or simultaneously by impregnation or co-mixing with the support.

4. Use according to any one of claims 1 to 3, in which said catalyst comprises at least one catalytic metal or compound of a catalytic metal from group VIB, said metal or compound of a catalytic metal from group VIB is molybdenum or tungsten, and the catalytic metal or the compound of a catalytic metal from group VIII is iron, nickel or cobalt.

5. Use according to any one of claims 1 to 4, in which said catalyst comprises at least one catalytic metal or compound of a catalytic metal from group VIB, said metal or compound of a catalytic metal from group VIB is molybdenum, and the catalytic metal or the compound of a catalytic metal from group VIII is nickel.

6. Use according to any one of claims 1 to 7, in which the diameter of the alumina extrudates is in the range 0.3 to 1.8 mm.

7. Use according to any one of claims 1 to 6, for hydrodesulphurization and hydrodemetallation of carbonaceous feedstocks comprising aromatic and/or olefinic, and/or naphtenic, and/or paraffinic compounds, said feedstocks comprising sulphur, metals, and optionally nitrogen, and/or oxygen.

8. Use according to any one of claims 1 to 7, for hydrodesulphurization of carbonaceous feedstocks comprising aromatic and/or olefinic, and/or naphtenic, and/or paraffinic compounds, said feedstocks comprising sulphur, and optionally nitrogen, and/or oxygen.

9. Use according to any one of claims 1 to 8, in which the hydrotreatment process is carried out at a temperature of about 320°C to 470°C, under a partial pressure of hydrogen of about 3 MPa to about 30 MPa, at a space velocity of about 0.1 to about 6 volumes of feed per volume of catalyst per hour, the ratio of gaseous hydrogen over the liquid hydrocarbon feed being in the range 100 to 3000 standard cubic metres per cubic metre ($Sm^3/m^3$).